(19) Europäisches Patentamt
European Patent Office
Office européen des brevets

(11) Veröffentlichungsnummer : **0 363 975 B1**

# (12) EUROPÄISCHE PATENTSCHRIFT

(45) Veröffentlichungstag der Patentschrift :
15.01.92 Patentblatt 92/03

(51) Int. Cl.⁵ : **B01J 2/22, B30B 11/20**

(21) Anmeldenummer : **89119013.4**

(22) Anmeldetag : **12.10.89**

(54) **Vorrichtung zur Erzeugung von Granalien oder Pastillen aus fliessfähigem Material.**

(30) Priorität : **12.10.88 DE 3834785**
**01.02.89 DE 3902957**

(43) Veröffentlichungstag der Anmeldung :
**18.04.90 Patentblatt 90/16**

(45) Bekanntmachung des Hinweises auf die
Patenterteilung :
**15.01.92 Patentblatt 92/03**

(84) Benannte Vertragsstaaten :
**AT BE CH DE ES FR GB IT LI NL**

(56) Entgegenhaltungen :
**CH-A- 487 733**
**GB-A- 870 597**

(73) Patentinhaber : **GEBR. KAISER**
**MASCHINENFABRIK**
**Postfach 283**
**W-4150 Krefeld 11 (DE)**

(72) Erfinder : **Kaiser, Herbert, Ing.**
**Friedensstr. 241**
**W-4150 Krefeld 11 (DE)**

(74) Vertreter : **Feldkamp, Rainer, Dipl.-Ing.**
**Patentanwälte Wallach, Koch, Dr. Haibach,**
**Feldkamp et al**
**P.O. Box 121120**
**W-8000 München 12 (DE)**

## Beschreibung

Die Erfindung bezieht sich auf ein Vorrichtung der im Oberbegriff des Patentanspruchs 1 genannten Art.

Eine derartige Vorrichtung ist aus dem DE-GM 1796248 bekannt. Bei dieser bekannten Vorrichtung wird das relativ hochviskose Material oberhalb des Preßspaltes zwischen der Hohlwalze und der Aupreßwalze eingeleitet, wobei ein Einstreichblech vorgesehen ist, das das Material in die Zahnlücken der Innenverzahnung der Hohlwalze einstreicht, aus denen es mit Hilfe der Außenverzahnung der Preßwalze durch die Bohrungen hinaus ausgepreßt und von der Hohlwalze abgegeben wird. Beiniedrigviskosem Material kann ein Einstreichblech entfallen, da dieses Material von selbst in den Preßsspalt fließt und durch die Austrittsbohrungen der Hohlwalze ausgepreßt wird. Bei dieser bekannten Vorrichtung ist weiterhin vorgesehen, daß durch Ändern des Abstandes der Drehachsen der Auspreßwalze und der Hohlwalze der Preßdruck änderbar ist, um in Abhängigkeit von der Viskosität die Größe und Form der erzeugten Granalien oder Pastillen zu ändern. Durch diese Verstellung der Lage der Auspreßwalze ist damit auch eine gewisse Anpassung an unterschiedlich viskoses Material möglich. Diese Anpassung ist jedoch lediglich über einen gewissen Bereich von Viskositätswerten möglich und es ist in vielen Fällen erwünscht, diesen Viskositätswertebereich zu vergrößern oder auf andere Weise auf die Größe der Pastillen oder Granalien Einfluß zu nehmen. Bei der bekannten Vorrichtung ist zu diesem Zweck die Auspreßwalze in höhenverstellbaren Drehlagern gelagert, während die Hohlwalze am Außenumfang angeordnete Laufringe trägt, die mit Lagerrollen zusammenwirken. Am Außenumfang der Hohlwalze ist eine Verzahnung angeordnet, die mit Antriebsrichtungen in Eingriff steht, die die Hohlwalze und über die Innen und Außenverzahnung auch die Auspreßwalze in Drehung antreiben. Da die Auspreßwalze exzentrisch zur Hohlwalze gelagert ist, muß diese Hohlwalze entweder als Zylindermantel oder zumindestens mit relativ großen Öffnungen an den Stirnseiten ausgebildet sein, um eine Drehung der Hohlwalze ohne Störung durch die Drehachse der Auspreßwalze zu ermöglichen. Auf diese Weise steht das fließfähige Material im Inneren der Hohlwalze dauernd mit der Umgebungsluft in Berührung, was bei bestimmten Materialien unerwünscht sein kann.

Der Erfindung liegt die Aufgabe zugrunde, eine Vorrichtung der eingangs genannten Art zu schaffen, die unterschiedliche Materialien über einen großen Viskositätsbereich verarbeiten kann.

Diese Aufgabe wird durch die im kennzeichnenden Teil des Patentanspruchs 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung der Vorrichtung ist es möglich, mit der gleichen Vorrichtung verschiedene Materialien zu verarbeiten, deren Viskosität sich über einen großen Bereich erstreckt, wobei es lediglich erforderlich ist, ein Mantelrohr mit vorgegebenen Querschnittsabmessungen der Bohrungen durch ein anderes mit Bohrungen größerer oder kleinerer Querschnittsfläche zu ersetzen oder das Mantelrohr vollständig fortzulassen, wobei dann der wirksame Querschnitt der Bohrungen durch die Bohrungen der Hohlwalze bestimmt ist, deren Durchmesser zumindest so groß ist, wie der Durchmesser der Bohrungen des Mantelrohres mit den größten Bohrungsquerschnitten.

Das Mantelrohr legt damit aufgrund der Querschnittsfläche seiner Bohrungen einen Grobbereich der Viskosität fest, während eine Feineinstellung der Größe der erzeugten Pastillen oder Granalien mit Hilfe der Einstellung der Auspreßwalze relativ zum Innenumfang der Hohlwalze erzielt werden kann. Dadurch ist es möglich, mit der gleichen Vorrichtung Materialien sehr unterschiedlicher Viskositäten verarbeiten, ohne daß ein Auswechseln der aufgrund ihrer Innenverzahnung relativ aufwendigen Hohlwalze erforderlich ist und wobei sich eine sehr hohe Gleichförmigkeit und Einstellbarkeit der Größe der erzeugten Pastillen oder Granalien ergibt.

Gemäß einer vorteilhaften Ausgestaltung der Erfindung können im Innenraum der Hohlwalze in Bewegungsrichtung der Hohlwalze hinter der Auspreßwalze liegende weitere mit einer Außenverzahnung versehene Walzen angeordnet sein, die während des Umlaufs der Hohlwalze einen zusätzlichen Unterdruck in den Zahnlücken und damit in den Bohrungen der Hohlwalze und des Mantelrohres erzeugen, so daß selbst bei dünnflüssigen Schmelzen ein Nachfließen der Schmelze aus den Bohrungen und ein Verschmieren des Außenumfanges des Mantelrohres vermieden wird. Hierdurch wird die Vorrichtung selbst für sehr niedrigviskose, d.h. dünnflüssige Materialien geeignet.

Die Schmelze kann der Vorrichtung vorzugsweise über ein Hohlrohr zugeführt werden, das sich im wesentlichen über die Länge der Auspreßwalze erstreckt und benachbart zu dieser einen Schlitz aufweist, aus dem die Schmelze in Form eines Filmes austritt, der sich auf den Außenumfang der Auspreßwalze legt. Dieses Hohlrohr kann entlang der Achse der Hohlwalze angeordnet sein und sich an deren Stirnfläche durch eine Hohlwelle erstrecken, die zur Lagerung der Hohlwalze dient.

Zusätzlich oder anstelle der Lagerung der Hohlwalze über deren Stirnfläche kann die Hohlwalze auch über eine Umfangslagerung gelagert sein, die beispielsweise durch an den Enden der Hohlwalze mit deren Umfang zusammenwirkende Rollen gebildet ist.

Gemäß einer bevorzugten Ausgestaltung der Vorrichtung ist es vorgesehen, die Stirnseiten der Hohlwalze vollständig zu verschließen, wobei die Auspreßwalze im Inneren der Hohlwalze mit Hilfe von Halterungen gelagert ist, die starr an dem zur Zuführung des Materials dienenden Hohlrohr befestigt sind. Zwischen den Stirnplatten der Hohlwalze und dem Hohlrohr sind vorzugwsweise in Radialrichtung verformbare Dichtungen angeordnet, sodaß die Achse des Hohlrohres und damit die Drehachse der Auspreßwalze in Radialrichtung gegenüber der Drehachse der Hohlwalze verstellbar ist, um die Eingriffstiefe der Außenverzahnung der Auspreßwalze in die Innenverzahnung der Hohlwalze zu verändern.

Gemäß einer vorteilhaften Ausgestaltung der Erfindung ist es hierbei möglich, die Auspreßwalze gegenüber ihrer üblichen Betriebsstellung mit ihrer Drehachse vertikal unterhalb der Drehachse der Hohlwalze, das heißt am unteren Scheitelpunkt der Hohlwalze, zu verschwenken wodurch ebenfalls in Abhängigkeit von der Viskosität der Schmelze ein Einfluß auf die Pastillen- oder Granalienform bzw. deren Größe genommen werden kann. Durch das Verschwenken der Halterungen für die Auspreßwalze kann damit erreicht werden, daß die Pastillen oder Granalien bereits vor oder hinter dem unteren Scheitelpunkt der Hohlwalze ausgestoßen und beispielsweise auf einem Kühlband abgelegt werden.

Das Hohlrohr kann sich entweder freitragend durch die Mittelbohrung einer Stirnplatte oder durch Mittelbohrungen beider Stirnplatten hindurcherstrecken und an beiden aus der Hohlwalze vorspringenden Enden gelagert sein.

Die Hohlwalze kann in der üblichen Weise durch am Außenumfang angeordnete Lagereinrichtungen und Führungsrollen gelagert sein, oder es kann zur Lagerung der Hohlwalze ein das Hohlrohr mit Abstand umgebendes Lagerrohr vorgesehen sein, wobei eine der Stirnplatten mit Antriebseinrichtungen, beispielsweise in Form von Zahn- oder Kettenrädern versehen sein kann.

In das Innere der Hohlwalze kann weiterhin ein inertes Schutzgas eingeleitet werden, was insbesondere dann vorteilhaft ist, wenn das fließfähige Material, beispielsweise eine sich auf höherer Temperatur befindliche Schmelze, mit der Umgebungsluft reagieren kann.

Zum Vorheizen der Vorrichtung und gegebenenfalls auch zur Aufrechterhaltung einer gewünschten Betriebstemperatur kann am Außemumfang der Hohlwalze und insbesondere in deren in Vertikalrichtung oberen Bereich ein Heizmantel angeordnet sein, der sich über einen erheblichen Teil des Umfangs der Hohlwalze erstreckt. Dieser Heizmantel kann in geringem Abstand von der Außenoberfläche der Hohlwalze angeordnet sein kann, um den Austritt von Schutzgas aus den nicht mit dem zu verarbeitenden Material gefüllten Bohrungen der Hohlwalze einzuschränken. Weiterhin kann es vorteilhaft sein, an dem in Drehrichtung der Hohlwalze vorderen oder hinteren Kante des Heizmantels Abstreifeinrichtungen anzuordnen, die an dem Außenumfang der Hohlwalze anhaftendes Material abstreifen und dieses ggf. von außen erneut in die Bohrungen der Hohlwalze einstreichen, so daß diese ebenfalls verschlossen werden und der Austritt von Schutzgas aus dem Inneren der Hohlwalze behindert wird.

Ausführungsbeispiele der Erfindung werden im folgenden anhand der Zeichnungen noch näher erläutert. In der Zeichnung zeigen :

Fig. 1     eine Längsschnittansicht durch die Hohlwalze einer ersten Ausführungsform der Vorrichtung ;

Fig. 2     eine Querschnittsansicht durch eine weitere Ausführungsform der Vorrichtung ;

Fig. 3     eine Längsschnittansicht einer weiteren Ausführungsform der Vorrichtung mit verschlossenen Stirnflächen ;

Fig. 4     eine Querschnittsansicht der Ausführungsform nach Fig. 3.

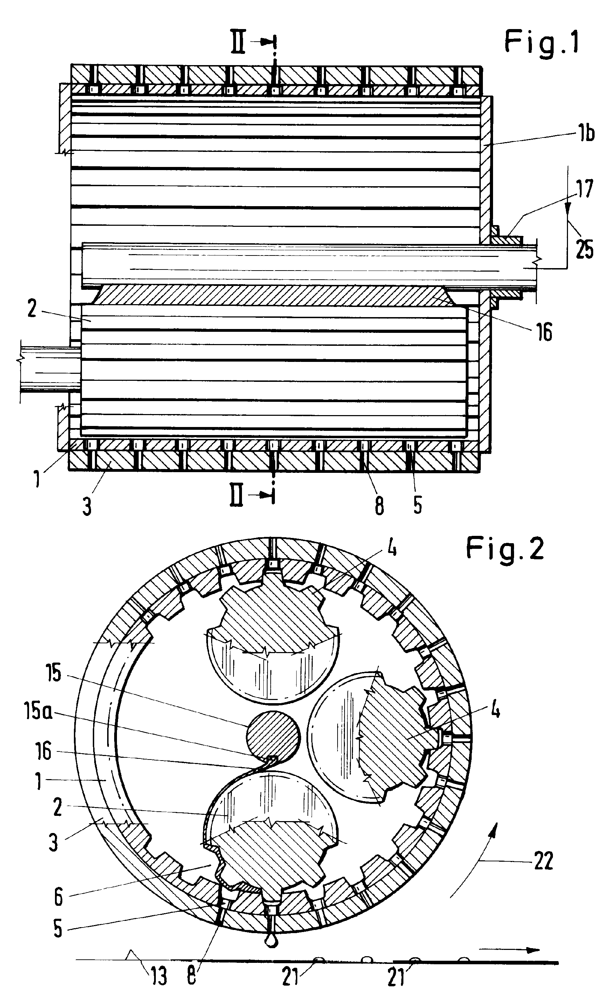

Bei der in Fig. 1 dargestellten Ausführungsform der Vorrichtung ist eine Hohlwalze (1) vorgesehen, die der Hohlwalze nach Fig. 2 entspricht und mit einer Innenverzahnung versehen ist, in die die Außenverzahnung einer Auspreßwalze (2) eingreift. Von den Zahnböden der Innenverzahnung der Hohlwalze (1) erstrecken sich Bohrungen (5) zum Außenumfang der Hohlwalze, wobei diese Bohrungen einen relativ großen Querschnitt aufweisen. Beim Umlauf der Hohlwalze (1) in Richtung des Pfeils (22) gemäß Fig. 2 wird die Auspreßwalze (2) aufgrund des Eingriffs der Außenverzahnung dieser Auspreßwalze (2) mit der Innenverzahnung der Hohlwalze (1) angetrieben und die Zähne der Auspreßwalzen (2) treten in die Zahnlücken der Innenverzahnung der Hohlwalze (1) ein, wobei in den Preßspalt (6) eingeführtes Material, das in die Zahnlücken der Innenverzahnung der Hohlwalze (1) eingetreten ist, aus diesen Zahnlücken über die Bohrungen (5) der Hohlwalze (1) und die Bohrungen (8) eines die Hohlwalze (1) umgebenden und mit dieser verbundenen Mantelrohres (3) ausgepreßt wird und in Form von Pastillen oder Granalien am Außenumfang des Mantelrohres (3) austritt. Diese Pastillen oder Granalien (21) werden auf einer Kühlfläche (13), beispielsweise in Form eines umlaufenden Kühlbandes abgelegt.

Die Bohrungen (8) des Mantelrohres weisen im allgemeinen einen kleineren Querschnitt auf als die Bohrungen der Hohlwalze (1), und dieses Mantelrohr ist auswechselbar am Außenumfang der Hohlwalze (1) befestigt, so daß Mantelrohre mit unterschiedlichen Querschnitten der Bohrungen (8) auf die Hohlwalze (1) aufgeschoben werden können, um eine Anpassung an die Viskosität des zu verarbeitenden Materials zu ermöglichen. Die Wahl des Mantelrohres mit einer entsprechenden Querschnittsfläche der Bohrungen (8) ermöglicht damit eine Grobeinstellung und Anpassung der Vorrichtung an einen gewissen Viskositätsbereich, während eine Feinanpassung durch eine Einstellung der Lage der Auspreßwalze (2) gegenüber dem Innenumfang der Hohlwalze (1) möglich ist, wobei die Zähne der Außenverzahnung der Auspreßwalze (2) mehr oder weniger tief in die Zahnlücken der Innenverzahnung der Hohlwalze (1) eintreten. Hierdurch wird der Auspreßraum, in dem sich das Material befindet, entsprechend vergrößert oder verkleinert.

Bei der in Fig. 2 dargestellten Ausführungsform sind gegenüber der Fig. 1 zusätzlich weitere mit Außenverzahnung versehene Walzen (4) im Inneren der Hohlwalze (1) angeordnet, deren Außenverzahnung ebenfalls mit der Innenverzahnung der Hohlwalze (1) kämmt, so daß diese Walzen (4) angetrieben werden. Beim Umlauf der Hohlwalze (1) treten die Zähne dieser zusätzlichen Walzen (4) in die Zahnlücken der Innenverzahnung der Hohlwalze (1) ein und erzeugen bei ihrer Herausbewegung aus dieser Zahnlücke einen zusätzlichen Unterdruck in diesen Zahnlücken bzw. den Bohrungen (5, 8), so daß die in diesen Bohrungen befindliche Schmelze zurückgesaugt wird, was insbesondere bei sehr dünnflüssigen Schmelzen von Bedeutung ist, um eine Verteilung der Schmelze am Außenumfang des Mantelrohres (3) zu verhindern.

Im übrigen entspricht die Ausführungsform nach Fig. 2 der Ausführungsform nach Fig. 1.

Die Hohlwalze (2) ist in der aus Fig. 1 ersichtlichen Weise mit Hilfe einer Stummelwelle (17) lediglich an einer Stirnfläche gelagert, so daß ein Auswechseln des Mantelrohres (3) sehr leicht möglich ist.

Das Mantelrohr selbst weist eine relativ einfache Konstruktion ohne jede Verzahnung auf, so daß gegenüber der Auswechslung der gesamten Hohlwalze und/oder der Anpreßwalzen mit den jeweiligen Verzahnungen ein erheblicher Aufwand eingespart werden kann.

Aus den Fig. 1 und 2 ist weiterhin eine vorteilhafte Möglichkeit der Zuführung der Schmelze zu erkennen. Die Schmelze wird über ein Hohlrohr (15) eingeleitet, das an ihrem der Auspreßwalze (2) benachbarten Umfangsabschnitt einen eingefrästen Schlitz (15a) aufweist, aus dem die Schmelze in Form eines Films (16) austritt. Dieser Film legt sich auf den Außenumfang der Auspreßwalze und wird bei deren Umdrehung in den Preßspalt (6) zwischen der Auspreßwalze (2) und dem Innenumfang der Hohlwalze (1) befördert.

Wie dies in den Fig. 1 und 2 dargestellt ist, kann dieses Hohlrohr (15) entlang der Achse der Hohlwalze (1) angeordnet sein, wobei in diesem Fall der Achsstummel (17) zur Lagerung der Hohlwalze als Hohlwelle ausgebildet ist.

Anstelle oder zusätzlich zur Lagerung der Hohlwalze (1) über deren Stirnfläche kann auch, insbesondere bei längeren Hohlwalzen, eine Umfangslagerung mit Hilfe von Rollen verwendet werden, die am Außenumfang der Hohlwalze angreifen, wie dies beispielsweise in DE-GM 1796248 beschreiben ist.

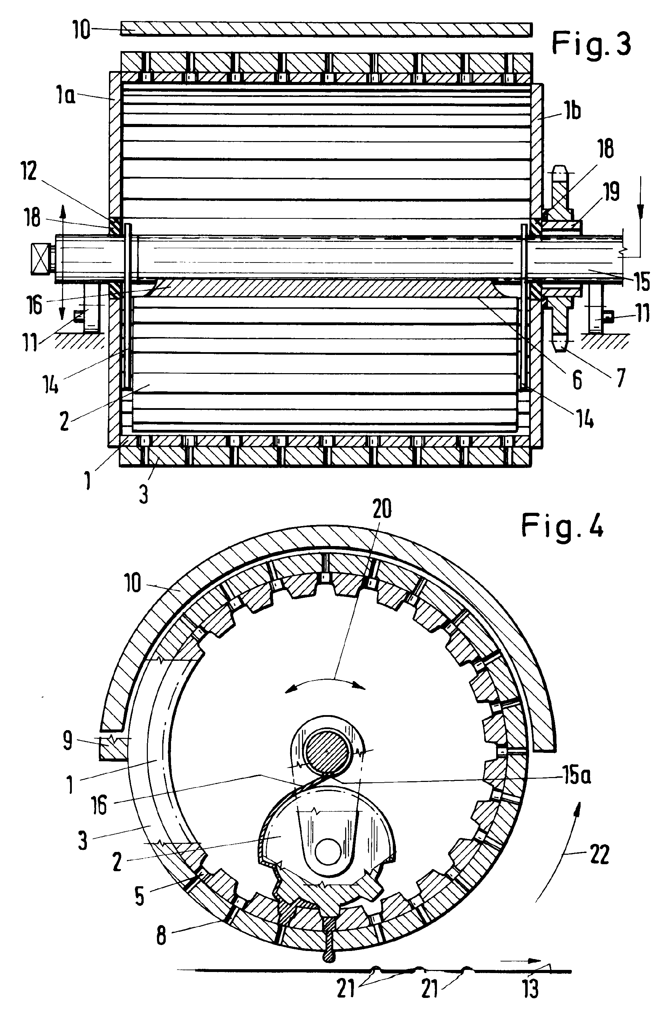

Die in den Figuren 3 und 4 dargestellte Ausführungsform der Vorrichtung umfaßt eine Hohlwalze (1), die ebenso wie bei der Ausführungsform nach den Figuren 1 und 2 eine Innenverzahnung aufweist, von deren Zahnböden aus sich Austrittsbohrungen (5, 8) zum Außenumfang der Hohlwalze (1) erstrecken.

Im Inneren der Hohlwalze ist eine mit Außenverzahnung versehene Auspreßwalze (2) angeordnet, die mit der Innenverzahnung der Hohlwalze (1) in Eingriff steht, um in die Zahnlücken der Innenverzahnung eingeleitetes zu verarbeitendes Material durch die Austrittsbohrungen (5, 8) hindurch auszupressen. Die Hohlwalze (1) kann wiederum mit einem auswechselbaren Mantelrohr (3) versehen sein, um es zu ermöglichen, für Materialien stark unterschiedlicher Viskositäten ein hinsichtlich des Querschnitts seiner Austrittsbohrungen am besten geeigneter Mantelrohr auszuwählen, ohne daß die gesamte Hohlwalze mit ihrer Innenverzahnung und den Antriebseinrichtungen ausgewechselt werden muß.

Das zu verarbeitende Material wird über das Hohlrohr (15) eingeleitet, das an dem mit dem Pfeil (25) bezeichneten Ende offen und am gegenüberliegenden axialen Ende verschlossen ist.

Dieses Hohlrohr (15) weist einen Schlitz (15a) auf, der auf die Auspreßwalze (2) gerichtet ist und aus dem das Material in Form eines Films (16) austritt und auf den Außenumfang der Auspreßwalze (2) aufgelegt wird, die das Material dann in die Zahnlücken der Hohlwalze (1) transportiert. An dem Hohlrohr (15) sind Halterungen in Form von Haltearmen (14) befestigt, die drehfest mit den Hohlrohr (15) verbunden sind und die Auspreßwalze drehbar lagern. Durch diese Art der Lagerung der Auspreßwalze (2) ist es möglich, die beiden Stirnseiten der Hohlwalze (1) durch Stirnplatten (1a und 1b) zu verschließen, so daß im Inneren der Hohlwalze ein abgeschlossener Raum gebildet wird, der ggf. über im Inneren des Hohlrohres (15) verlaufende Leitungen mit einem Schutzgas wie zum Beispiel Stickstoff füllbar ist.

Die Stirnplatten (1a und 1b) weisen Mittelbohrungen (12) auf, in denen radial verformbare Dichtungen (18) angeordnet sind, die eine Relativverschiebung der Längsachse des Hohlrohres (15) und damit der Drehachse der Auspreßwalze (2) gegenüber der Drehachse der Hohlwalze (1) ermöglichen, wenn dies zur Steuerung der Größe und Form der herzustellenden Granalien oder Pastillen erwünscht ist.

Weiterhin ist es möglich, mit Hilfe von nicht dargestellten Schwenkeinrichtungen das Hohlrohr (15) um seine Längsachse und damit die Halterarme (14) und die Auspreßwalze in Umfangsrichtung zu verschwenken. Hierdurch wird erreicht, daß das Material nicht am unteren Scheitelpunkt der Hohlwalze (1) austritt, wie dies in Fig. 4 dargestellt ist, sondern in Umfangsrichtung vor oder hinter diesem unteren Scheitelpunkt, was ebenfalls eine Einflußnahme auf die Form und Größe der Pastillen oder Granalien ermöglicht. Auf diese Weise ist die Anzahl der einzustellenden Parameter und damit der Bereich der Viskositätswerte des mit der Vorrichtung verarbeitbaren Materials wesentlich vergrößert.

In den Figuren 3 und 4 ist die Art der Lagerung der Hohlwalze und des Hohlrohres nur schematisch angedeutet. Die Hohlwalze kann entweder in der aus dem DE-GM 1796248 bekannten Weise in am Außenumfang der Hohlwalze angeordnete Lagereinrichtungen drehbar gelagert sein, wobei auch Antriebseinrichtungen am Außenumfang angeordnet sind, oder die Hohlwalze (1) kann in der in Fig. 3 angedeuteten Form auf Lagerhülsen (19) gelagert sein, die sich mit Abstand von dem Hohlrohr (15) um dieses herum erstrecken und zur Lagerung der Stirnplatten (1a, 1b) der Hohlwalze (1) dienen. Mit einer der Stirnplatten (1b) kann weiterhin ein Zahnoder Kettenrad (7) verbunden sein, das den Antrieb der Hohlwalze (1) ermöglicht und drehbar auf einer der Lagerhülsen (19) gelagert ist.

Wie dies in Fig. 3 weiterhin schematisch dargestellt ist, wird bei einer ortsfesten Lagerung der Hohlwalze beispielsweise durch Exzentereinrichtungen (11) eine radiale Verstellung zwischen der Drehachse der Auspreßwalze (2) und der Drehachse der Hohlwalze (1) erreicht. An einem Ende des Hohlrohres (15) können weiterhin Schwenkeinrichtungen zum Verschwenken des Hohlrohres (15) um dessen Längsachse und damit der Auspreßwalze in Umfangsrichtung vorgesehen sein, wie dies in Fig. 4 durch den Pfeil (20) schematisch angedeutet ist.

Wie dies in Fig. 4 weiterhin angedeutet ist, kann der Außenumfang der Hohlwalze (1) zumindestens im vertikal oberen Bereich von einem Heizmantel (10) umgeben sein, der mit relativ geringem Abstand von dem Außenumfang der Hohlwalze (1) bzw. des Mantelrohres (3) angeordnet ist und eine Vorheizung der Hohlwalze und ggfs. eine Steuerung ihrer Betriebstemperatur ermöglicht. Dieser Heizmantel (10) kann weiterhin den Austritt des Schutzgases aus dem Inneren der Hohlwalze (1) durch die Austrittsbohrungen (5, 8) hindurch einschränken.

Weiterhin ist es möglich, an dem in Drehrichtung vorderen oder hinteren Ende des Heizmantels (10) Abstreifeinrichtungen (9) anzuordnen, die das am Außenumfang der Hohlwalze (1) bzw. des Mantelrohres (3) anhaftende Material abstreifen und dies ggf. erneut in die Austrittsbohrungen einleiten, sodaß diese Bohrungen verschlossen werden und den Austritt des Schutzgases aus dem Inneren der Hohlwalze einschränken.

Bei der dargestellten Ausführungsform erstreckt sich das Hohlrohr (15) durch beide Stirnplatten hindurch. Es ist jedoch auch möglich, daß sich das Hohlrohr (15) freitragend durch die Mittelbohrung (12) einer Stirnplatte (1a, 1b) in das Innere der Hohlwalze erstreckt, wenn das Hohlrohr entsprechend biegefest ausgebildet ist.

Auch bei der Ausführungsform nach den Fig. 3 und 4 können die in Fig. 2 dargestellten zusätzlichen Walzen 4 verwendet werden, um bei sehr dünnflüssigen Schmelzen in den Austrittsbohrungen (5,8) verbleibendes Material zurückzusaugen. Diese zusätzlichen Walzen können mit Hilfe von weiteren Haltearmen ähnlich den Haltearmen (14) nach Fig. 3 an dem Hohlrohr gelagert werden.

## Patentansprüche

1. Vorrichtung zur Erzeugung von Granalien oder Pastillen aus fließfähigem Material mit unterschiedlicher Viskosität, bei der das Material dem Preßspalt zwischen einer umlaufenden Hohlwalze (1) mit Innenverzahnung und einer mit dieser Innenverzahnung in Eingriff stehenden außenverzahnten Auspreßwalze (2) zugeführt wird, wobei sich von den jeweiligen Zahnböden der Innenverzahnung der Hohlwalze zu deren Außenseite hin erstreckende Bohrungen (5) vorgesehen sind, durch die hindurch das Material beim Eingriff mit der Auspreßwalze (2) ausgepreßt und in Form von Pastillen oder Granalien (21) auf einer Kühlfläche (13) abgelegt wird, dadurch **gekennzeichnet,** daß auf dem Außenumfang der Hohlwalze ein Mantelrohr (3) auswechselbar befestigt ist, das mit den Bohrungen (5) der Hohlwalze (1) fluchtende Bohrungen (8) mit an die Viskosität des Materials angepaßten Durchmessern aufweist.

2. Vorrichtung nach Anspruch 1, dadurch **gekennzeichnet,** daß die Auspreßwalze (2) gegenüber der Hohlwalze (1) derart verstellbar ist, daß die Tiefe des Eingriffs der Innenverzahnung der Hohlwalze (1) und der Außenverzahnung der Auspreßwalze (2) änderbar ist.

3. Vorrichtung nach Anspruch 1 oder 2, dadurch **gekennzeichnet,** daß die Auspreßwalze (2) am in Vertikalrichtung am tiefsten liegenden Innenumfangsbereich der Hohlwalze (1) angeordnet ist und daß im Innenraum der Hohlwalze (1) weitere mit einer Außenverzahnung versehene Walzen (4) in Drehrichtung der Hohlwalze (1) hinter der Auspreßwalze (2) angeordnet sind, die in den Bohrungen (5, 8) einen Unterdruck erzeugen und das darin zurückbleibende Material zurücksaugen.

4. Vorrichtung nach einem der vorhergehenden Ansprüche, dadurch **gekennzeichnet,** daß die Hohlwalze (1) legiglich an einer ihrer Stirnflächen (1b) gelagert ist.

5. Vorrichtung nach einem der vorhergehenden Ansprüche, dadurch **gekennzeichnet,** daß die Hohlwalze (1) an zumindestens einem, ihrer Enden durch eine Umfangslagerung gelagert ist.

6. Vorrichtung nach einem der vorhergehenden Ansprüche, dadurch **gekennzeichnet,** daß die Schmelze in die Hohlwalze (1) über ein Hohlrohr (15) eingeleitet wird, das sich im wesentlichen über die Länge der Auspreßwalze (2) und oberhalb dieser erstreckt, und daß das Hohlrohr (15) gegenüberliegend zur Auspreßwalze (2) im Inneren der Hohlwalze (1) liegende Austrittsöffnungen (15a) für den Austritt des fließfähigen Materials aufweist.

7. Vorrichtung nach Anspruch 6, dadurch **gekennzeichnet,** daß das Hohlrohr (15) entlang der Achse der Hohlwalze (1) angeordnet ist und eine zur Lagerung der Hohlwalze dienende Hohlwelle (17 ; 19) durchdringt.

8. Vorrichtung nach Anspruch 6 oder 7, dadurch **gekennzeichnet,** daß beide Stirnflächen der Hohlwalze (1) durch Stirnplatten (1a, 1b) verschlossen sind, daß zumindest eine Stirnplatte (1a, 1b) eine Mittelbohrung (12) aufweist, durch die hindurch sich das zur Zuführung der Schmelze dienende Hohlrohr (15) unter Abdichtung hindurch erstreckt, und daß an dem Hohlrohr (15) Halterungen (14) befestigt sind, an deren freien Enden die Auspreßwalze (2) drehbar gelagert ist.

9. Vorrichtung nach Anspruch 8, dadurch **gekennzeichnet,** daß die Hohlwalze (1) an einer ihrer Stirnplatten (1b) mit daran befestigten Antriebseinrichtungen (7) versehen ist.

10. Vorrichtung nach einem der Ansprüche 6 bis 9, dadurch **gekennzeichnet,** daß die Hohlwalze (1) unabhängig von dem Hohlrohr (15) drehbar gelagert ist und daß Verstelleinrichtungen (11) zur Verstellung des Abstandes zwischen der Drehachse der Hohlwalze (1) und der Längsachse des Hohlrohres (15) derart vorgesehen sind, daß die Tiefe des Eingriffs der Innenverzahnung der Hohlwalze (1) mit der Außenverzahnung der Auspreßwalze (2) änderbar ist.

11. Vorrichtung nach einem der vorhergehenden Ansprüche, dadurch **gekennzeichnet,** daß sich die Drehachse der Auspreßwalze (2) im Normalbetrieb in Vertikalrichtung unterhalb der Drehachse der Hohlwalze (1) befindet und mit Hilfe von Schwenkeinrichtungen um diese Normalstellung verschwenkbar ist.

12. Vorrichtung nach einem der Ansprüche 8 bis 11, dadurch **gekennzeichnet,** daß in den Mittelbohrungen der Stirnplatten (1b) der Hohlwalze (1) in Radialrichtung verformbare Dichtungen (18) angeordnet sind, die diese Stirnplatten (1a, 1b) gegenüber dem Hohlrohr (15) abdichten.

13. Vorrichtung nach einem der Ansprüche 6 bis 12, dadurch **gekennzeichnet,** daß in dem Hohlrohr (15) Einrichtungen zur Einleitung eines Schutzgases in das Innere der Hohlwalze (1) angeordnet sind.

14. Vorrichtung nach einem der Ansprüche 6 bis 13, dadurch **gekennzeichnet,** daß die Austrittsöffnungen des Hohlrohres (15) durch einen auf die Auspreßwalze (2) gerichteten Schlitz (15a) gebildet sind, aus dem das fließfähige Material in Form eines Films (16) austritt, der auf dem Außenumfang der Auspreßwalze (2) abgelegt wird.

15. Vorrichtung nach einem der vorhergehenden Ansprüche, dadurch **gekennzeichnet,** daß der Außenumfang der Hohlwalze (1) bzw. des Mantelrohres (3) in seinem in Vertikalrichtung oberen Bereich durch einen Heizmantel (10) abgedeckt ist.

16. Vorrichtung nach einem der vorhergehenden Ansprüche, dadurch **gekennzeichnet,** daß in Umfangsrichtung vor und/oder hinter dem Heizmantel (10) Abstreifeinrichtungen (9) zum Abstreifen von am Außenumfang der Hohlwalze (1) bzw. des Mantelrohres (3) anhaftendem fließfähigen Material vorgesehen sind.


## Claims

1. Apparatus for producing granules or pastils from flowable materials of different viscosities in which the material is supplied to a pressing nip between a rotating hollow roll (1) having internal toothing along the inner peripheral area said hollow roll and an externally toothed ejection roll (2) in engagement with said internal toothing, bores (5) being provided which extend from the respective teeth bottoms of the internal toothing of the hollow roll to the outer side thereof and through which the material is ejected on engagement with the ejection roll (2) and deposited in the form of granules (21) on a cooling surface (13), characterized in that on the outer periphery of said hollow roll a jacket tube (3) is interchangeable secured which jacket tube comprising bores (8) which align with the bores (5) of the hollow roll (1) and have diameters adapted to the viscosity of the material.

2. Apparatus according to claim 1, characterized in that the ejection roll (2) is adjustable with respect to the hollow roll (1) in such a manner that the depth of the engagement of the internal toothing of the hollow roll (1) and the external toothing of the ejection roll (2) is variable.

3. Apparatus according to claim 1 or 2, characterized in that the ejection roll (2) is arranged at the section of said inner peripheral area of said hollow roll (1) lowest, in the vertical direction and further characterized in that the inner interior of said hollow roll (1) further includes additional rolls (4) provided with external toothing arranged in the direction of rotation of the hollow roll (1) behind the ejection roll (2) to generate in the bores (5, 8) a partial vacuum and suck back the material remaining therein.

4. Apparatus according to any of the preceding claims, further characterized in that said said hollow roll (1) is mounted at only one of said end faces (1b).

5. Apparatus according to any of the preceding claims, characterized in that the hollow roll (1) is mounted at least at one of its ends by a peripheral mounting.

6. Apparatus according to any of the preceding claims, characterized in that the melt is introduced into the hollow roll (1) via a hollow tube (15) which extends substantially over the length of the ejection roll (2) and above the latter and that the hollow tube (15) comprises exit openings (15a) positioned oposite the ejection roll (2) in the interior of the hollow roll (1) for the exit of the flowable material.

7. Apparatus according to claim 6, characterized in that the hollow tube (15) is arranged along the axis of the hollow roll (1) and passes through a hollow shaft (17 ; 19) serving to mount the hollow roll.

8. Apparatus according to claim 6 or 7, characterized in that both end faces of the hollow roll (1) are closed by end plates (1a, 1b), that at least one of said end plates (1a, 1b) has a center bore (12) through which the hollow tube (15) serving for the supply of the melt passes in sealed manner, and further including holders (14) secured to the hollow tube (15) on the free ends of which the ejection roll (2) is rotatably mounted.

9. Apparatus according to claim 8, characterized in that the hollow roll (1) is provided at one of its end plates (1b) with drive means (7) mounted thereon.

10. Apparatus according to any of one of claims 6 to 9, characterized in that the hollow roll (1) is mounted rotatably independently of the hollow tube (15) and that adjusting means (11) for adjusting the distance between the rotation axis of the hollow roll (1) and the longitudinal axis of the hollow tube (15) are provided in such a manner that the depth of the engagement of the internal toothing of the hollow roll (1) with the external toothing of the ejection roll (2) is variable.

11. Apparatus according to any of the preceding claims, characterized in that the rotation axis of the ejection roll (2) in normal operation is disposed in the vertical direction beneath the rotation axis of the hollow roll (1) and is pivotable with the aid of pivot means about said normal position.

12. Apparatus according to any one of claims 8 to 11, characterized in that in the center bores of the end plates (1b) of the hollow roll (1) seals (18) deformable in the radial direction are arranged and seal said end plates (1a, 1b) with respect to the hollow tube (15).

13. Apparatus according to any one of claims 6 to 12, characterized in that in the hollow tube (15) means are arranged for introducing a protective gas into the interior of the hollow roll (1).

14. Apparatus according to any one of claims 6 to 13, characterized in that the exit openings of the hollow tube (15) are formed by a slot (15a) which is directed towards the ejection roll (2) and from which the flowable material emerges in the form of a film (16) which is deposited on the outer periphery of the ejection roll (2).

15. Apparatus according to any one of the preceding claims, characterized in that the outer periphery of the hollow roll (1) or of the jacket tube (3) is covered in its upper region in the vertical direction by a heating jacket (10).

16. Apparatus according to any one of the preceding claims, characterized in that scraper means (9) are provided in the peripheral direction for scraping off flowable material adhering to the outer periphery of the hollow roll (1) or the jacket tube (3).

## Revendications

1. Dispositif pour produire des granules ou des pastilles à partir de matières fluides présentant des viscosités différentes, dans lequel la matière est amenée à l'interstice de pressage situé entre un cylindre creux tournant (1) muni d'une denture intérieure et un cylindre de refoulement (2) muni d'une denture extérieure en prise avec cette denture intérieure, cependant qu'il est prévu des perçages (5) qui s'étendent depuis le fond de chaque dent de la denture intérieure du cylindre creux vers le côté extérieur de celui-ci et à travers lesquels la matière est exprimée lors de la venue en prise avec le cylindre de refoulement (2) pour être posée sous la forme de pastilles ou de granules (21) sur une surface refroidie (13), caractérisé par le fait qu'un tube-enveloppe (3) est fixé de manière interchangeable sur le pourtour extérieur du cylindre creux, et qu'il présente des perçages (8) qui sont dans l'alignement des perçages (5) du cylindre creux (1) et dont les diamètres sont adaptés à la viscosité de la matière.

2. Dispositif selon la revendication 1, caractérisé par le fait que le cylindre de refoulement (2) peut être déplacé par rapport au cylindre creux (1) de telle manière que la profondeur de prise mutuelle de la denture intérieure du cylindre creux (1) et de la denture extérieure du cylindre de refoulement (2) puisse être modifiée.

3. Dispositif selon la revendication 1 ou 2, caractérisé par le fait que le cylindre de refoulement (2) est disposé dans la région du pourtour intérieur du cylindre creux (1) qui est située au plus bas dans la direction verticale, et par le fait que d'autres cylindres (4) munis d'une denture extérieure sont disposés dans le volume intérieur du cylindre creux (1), en aval du cylindre de refoulement (2) dans la direction de rotation du cylindre creux (1), pour engendrer une dépression dans les perçages (5, 8) et faire revenir par aspiration la matière qui y est restée.

4. Dispositif selon l'une des revendications précédentes, caractérisé par le fait que le cylindre creux (1) est monté tournant sur l'une seulement (1b) de ses surfaces frontales.

5. Dispositif selon l'une des revendications précédentes, caractérisé par le fait que le cylindre creux (1) est monté tournant à l'une au moins de ses extrémités grâce à un montage sur paliers de son pourtour.

6. Dispositif selon l'une des revendications précédentes, caractérisé par le fait que la matière fondue est introduite dans le cylindre creux (1) par l'intermédiaire d'un tube creux (15) qui s'étend pour l'essentiel sur toute la longueur du cylindre de refoulement (2) et au-dessus de celui-ci, et par le fait que le tube creux (15) présente, pour la sortie de la matière fluide, des orifices de sortie (15a) situés en face du cylindre de refoulement (2) à l'intérieur du cylindre creux (1).

7. Dispositif selon la revendication 6, caractérisé par le fait que le tube creux (15) est disposé selon l'axe du cylindre creux (1), et qu'il traverse un arbre creux (17 ; 19) qui sert au montage tournant du cylindre creux.

8. Dispositif selon la revendication 6 ou 7, caractérisé par le fait que les deux surfaces frontales du cylindre creux (1) sont fermées par des plaques frontales (1a, 1b), par le fait qu'au moins une plaque frontale (1a, 1b) présente un perçage central (12) à travers lequel le tube creux (15) qui sert à l'amenée de la matière fondue s'étend de manière étanche, et par le fait que sont fixées au tube creux (15) des brides de support (14) aux extrémités libres desquelles le cylindre de refoulement (2) est monté en rotation.

9. Dispositif selon la revendication 8, caractérisé par le fait que le cylindre creux (1) est muni sur l'une (1b) de ses plaques frontales de dispositifs d'entraînement (7) qui y sont fixés.

10. Dispositif selon l'une des revendications 6 à 9, caractérisé par le fait que le cylindre creux (1) est monté en rotation indépendamment du tube creux (15), et par le fait que des dispositifs de réglage (11) destinés au réglage de la distance entre l'axe de rotation du cylindre creux (1) et l'axe longitudinal du tube creux (15) sont prévus de telle manière que la profondeur de prise mutuelle de la denture intérieure du cylindre creux (1) et de la denture extérieure du cylindre de refoulement (2) puisse être modifiée.

11. Dispositif selon l'une des revendications précédentes, caractérisé par le fait qu'en fonctionnement normal, l'axe de rotation du cylindre de refoulement (2) se trouve au-dessous de l'axe de rotation du cylindre creux (1) dans la direction verticale, et qu'on peut le faire pivoter autour de cette position normale à l'aide de dispositifs de pivotement.

12. Dispositif selon l'une des revendications 8 à 11, caractérisé par le fait que des joints d'étanchéité (18) qui peuvent être déformés en direction radiale sont disposés dans les perçages centraux des plaques frontales (1b) du cylindre creux (1), et qu'ils rendent étanches ces plaques frontales (1a, 1b) par rapport au tube creux (15).

13. Dispositif selon l'une des revendications 6 à 12, caractérisé par le fait que des dispositifs destinés à introduire un gaz protecteur à l'intérieur du cylindre creux (1) sont disposés dans le tube creux (15).

14. Dispositif selon l'une des revendications 6 à 13, caractérisé par le fait que les orifices de sortie du tube creux (15) sont constitués par une fente (15a) dirigée vers le cylindre de refoulement (2) depuis laquelle la matière fluide sort sous la forme d'un film (16) qui est déposé sur le pourtour extérieur du cylindre de refoulement (2).

15. Dispositif selon l'une des revendications précédentes, caractérisé par le fait que le pourtour extérieur du cylindre creux (1) ou du tube-enveloppe (3), respectivement, est recouvert par une enveloppe chauffante (10) dans sa zone supérieure dans la direction verticale.

16. Dispositif selon l'une des revendications précédentes, caractérisé par le fait qu'en amont et/ou en aval de l'enveloppe chauffante (10) dans la direction circonférentielle, il est prévu des dispositifs de raclage (9) destinés à racler la matière fluide qui adhère au pourtour extérieur du cylindre creux (1) ou du tube-enveloppe (3), respectivement.

Fig.1

Fig.2

Fig. 3

Fig. 4